(19)

Europäisches
Patentamt
European
Patent Office
Office européen
des brevets

(11)  **EP 3 901 673 B1**

(12)  **EUROPEAN PATENT SPECIFICATION**

(45) Date of publication and mention
of the grant of the patent:
**27.12.2023  Bulletin 2023/52**

(51) International Patent Classification (IPC):
*G02B 5/08* *(2006.01)*        *A45D 42/10* *(2006.01)*
*A47G 1/02* *(2006.01)*

(21) Application number: **21169603.4**

(22) Date of filing: **21.04.2021**

(52) Cooperative Patent Classification (CPC):
**A45D 42/10; A47G 1/02;** A47G 2200/08; G02B 1/14

(54) **BACK-LIGHT MIRROR**

HINTERLEUCHTETER SPIEGEL

MIROIR RETRO-ECLAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.04.2020  IT 202000008731**

(43) Date of publication of application:
**27.10.2021  Bulletin 2021/43**

(73) Proprietor: **Vanita' & Casa S.r.l.
33081 Aviano (PN) (IT)**

(72) Inventor: **CARUSO, Alexander
33081 Aviano (IT)**

(74) Representative: **Giugni, Diego et al
Propria S.r.l.
Via della Colonna, 35
33170 Pordenone (IT)**

(56) References cited:
**EP-A1- 2 907 423        EP-A2- 1 337 586
EP-B1- 1 337 586        WO-A1-2015/004363
WO-A2-2007/062409        CN-A- 108 308 963
CN-A- 109 527 891        GB-A- 2 419 091
US-A1- 2004 097 662**

EP 3 901 673 B1

**Description**

TECHNICAL FIELD OF INVENTION

The present invention refers to a mirror for home, residential or industrial environments provided with back-lighting. In particular, the invention relates to a mirror that is back-light and free of any patterns created on the glass that could interrupt the continuity of the mirroring effect when the mirror is not backlighted.

PRIOR ART

The back-light mirrors presently available on the market can be grouped in two general categories, depending on the positioning of the light source. A first category consists of mirrors in which the light source is mounted on the back, opposite the reflecting face of the mirror, but along the perimetrical edge of the mirror, so as to indirectly illuminate the environment and, therefore, also the person that is mirrored on it.

A different category is represented by a light source always mounted on the face of the mirror opposite to its reflecting face, but turned toward said reflecting face so as to directly and frontally illuminate the person that is mirrored on it.

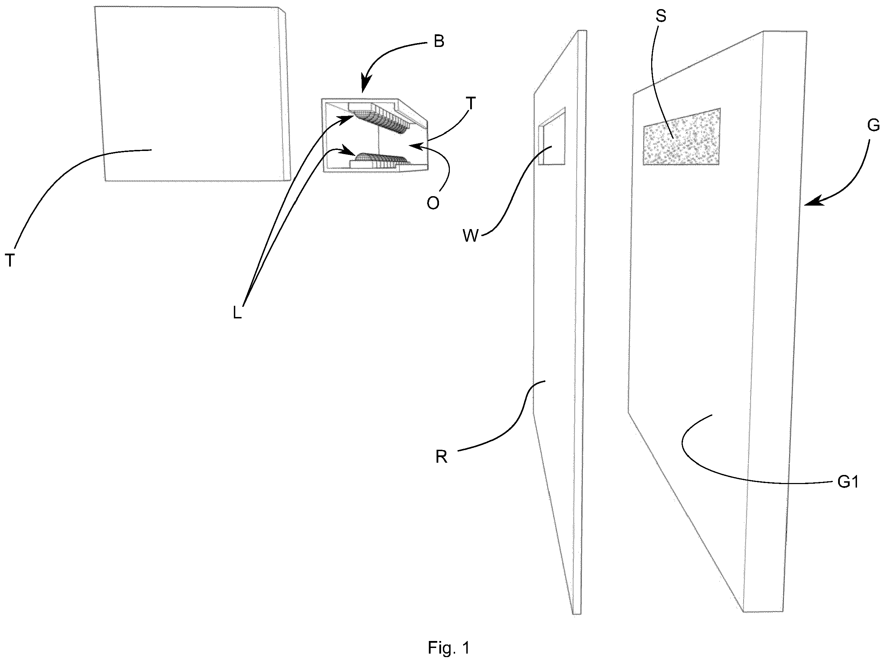

This second category of mirrors, as shown in figure 1, is generally made up of a glass plate G in which a face G1 is coated with a film of reflecting material R. This face G1 is usually treated in the portion where the light source is mounted. In addition, a portion of the reflecting film R, coinciding with said portion, is removed, obtaining thereby a window W so as to allow the passage of the light from the backlighting source.

The treatment on the glass normally consists of a sandblasting process S that makes the surface of the face G1 of the glass opaque, off-white or translucent. This treatment is applied necessarily to allow the passage of as much light as possible through the glass and, at the same time, to conceal the light spots of the individual LEDs. In fact, in addition to having an unattractive visual effect, the direct light spots are irritating to see.

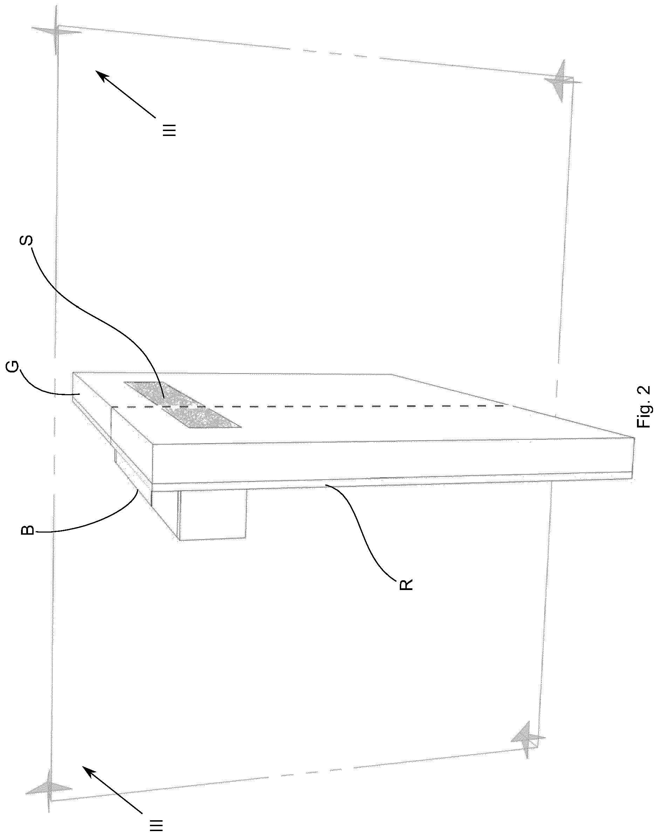

On the window W of the reflecting film R, formed by a silver-plating treatment, is applied a longitudinal duct B having a generally C-shaped cross section and containing a light source, such as for example a series of LED lights L. The longitudinal ends are closed by respective covers T to enable the light to exit only through the longitudinal opening O of the duct. In fact, as shown in figures 2 and particularly 3, the back-light mirror is provided with the duct B fixed to the glass G by means, for example, of glue or adhesive 3M means (not shown) so that the opening O substantially overlaps the window W of the reflecting material R, which in turn overlaps the sandblasted portion S of the glass.

The structure just now described is relatively simple to make but it requires processing the glass by sand-blasting.

In addition, from the functional and aesthetic point of view, the mirror is discontinued at said sanding, even if only in areas that are normally perimetrical. Nonetheless, in certain situations, the limitation of the mirroring portion can be irksome and, in any case, the aesthetic effect of sandblasting with the suspension of the continuity of the mirroring effect is not very appreciated by the users, especially when the light of the mirror is off. Moreover, the strip of sandblasted glass not only does not reflect the image but all the mirrored part above and on the sides of the sandblasted portion is lost.

A solution of this kind is described in patent application GB 2419091, wherein a mirror support unit includes sockets for lights having translucent covers to be fastened on the parts of the mirror that are permeable to light. Such covers are defined as transparent and translucent plates, like the corresponding areas of the mirror, in which they can be a clear glass or a sandblasted glass.

In contrast, the international patent application WO 2007/062409 describes a mirror on the rear of which is coupled a television screen and light sources. In particular, to enable a good visibility of the images projected by the screen, on said mirror the surface is either not covered by any film or is covered by a reflecting and transmitting film. Similarly, on the light sources such a film can be present or absent. But in the case in which the film is not present, the light source is visible, especially when the light is on, giving an unpleasant aesthetic or often a glaring effect. In the case in which it is present, the film must allow the passage of the light without any dissipating effect, otherwise the screen would show blurred pictures. This situation, however, especially when the light is on makes the lighting points visible, with the above-mentioned aesthetic and glare problem.

SUMMARY OF THE INVENTION

The technical problem at the basis of the present invention is therefore to provide a back-lighted mirror without the sand-blasting treatment which on one hand involves an extra workload from the point of view of production and on the other hand interrupts the continuity of the mirroring effect, and at the same time to provide a back-light mirror in which the light points are invisible with both the light on and the light off.

This problem is resolved by a particular combination of elements to apply on the glass surface opposite to the exposed side of a back-light mirror such as to avoid any processing of the glass, as well by the selection of a non-transparent glass.

A first objective of the present invention is therefore to provide a back-light mirror that is particularly economic to make.

A second objective is a mirror that is free of discontinuities of the reflective effect when it is not back-light.

BRIEF DESCRIPTION OF THE DRAWINGS

Further characteristics and the advantages of the back-light mirror of the present invention will become more evident from the following description and the non-limitative examples referring to the enclosed figures, wherein:

- figure 1 is a schematic perspective and exploded view of a back-light mirror according to the prior art;
- figure 2 is a schematic perspective view of the assembled mirror of figure 1;

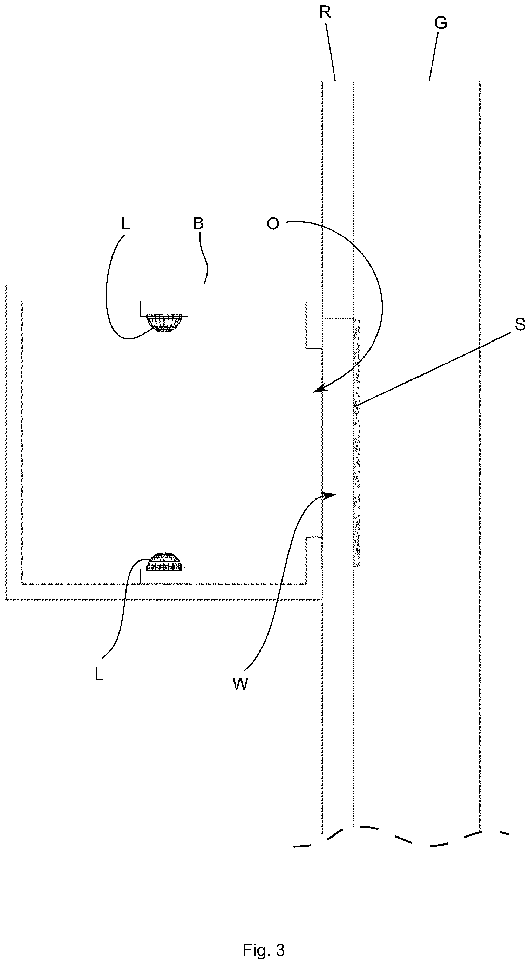

- figure 3 is a schematic view in cross section along plane III-III of the mirror of figure 2;
- figure 4 is a schematic perspective and exploded view of a back-light mirror according to the present invention;
- figure 5 is a schematic cross-sectional view of an enlarged detail of the assembled mirror of figure 4;
- figure 6 is a schematic perspective front view of the assembled mirror of figure 4, in a first condition;
- figure 7 is a schematic perspective front view of the assembled mirror of figure 4, in a second condition;
- figure 8 is a schematic cross-sectional view of a mirror according to the present invention, according to a variant embodiment.

DETAILED DESCRIPTION OF THE INVENTION

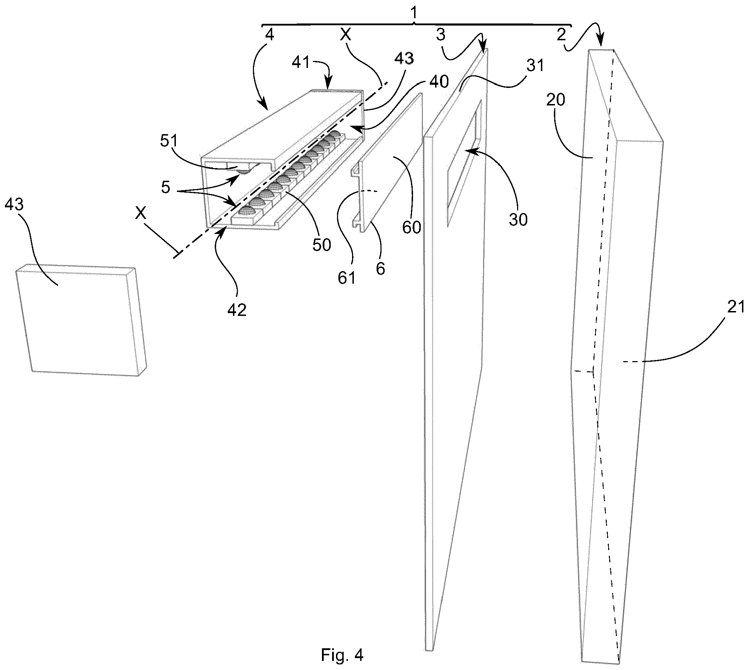

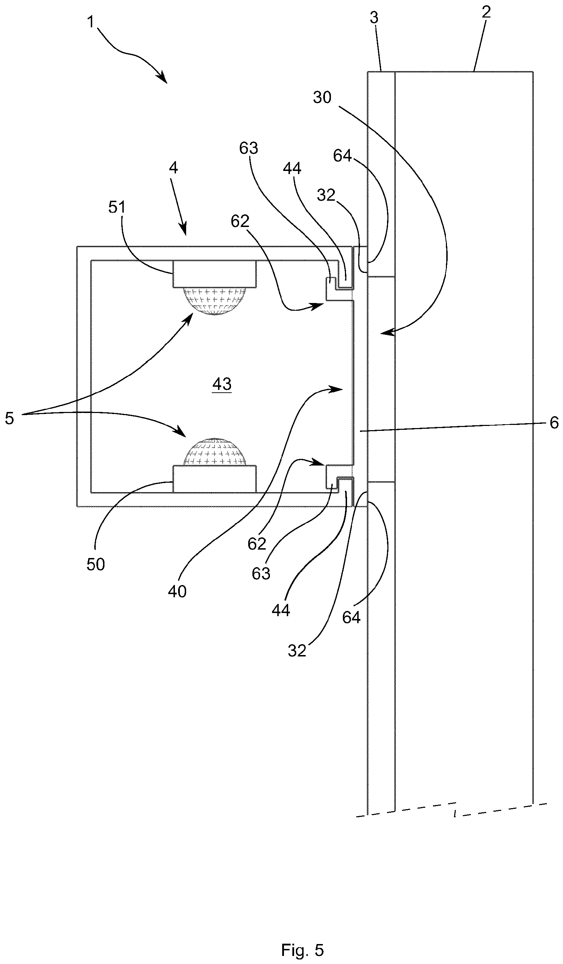

As shown in figures 4 and 5, the reference numeral 1 indicates overall a back-light mirror according to the invention with all its main components. In particular, the mirror 1 comprises a glass sheet 2 provided with two opposite flat sides 20, 21, a film 3 of a material that makes the glass become reflecting applied to a first one of said flat sides and provided with a window 30 near a first side of the same 31, and a duct or channel 4 that extends substantially rectilinear along an axis X-X. The duct 4 has a generally C-shaped cross section with a longitudinal opening 40 that preferably runs along its whole length from a first end 41 to a second end 42. Each end is preferably closed by a corresponding plug 43. Inside the duct is housed a light source 5.

Advantageously, the glass sheet 2 consists of a smoke-grey translucent glass that is semireflecting and semitransmitting, that is, a tinted glass that has a clear virtual image. In particular, the glass has the following light transmittance values measured according to the GB/T 18915.1-2013 Standard:

| transmittance | Y=48.70 | L=75.30 | a=-2.00 | b=-0.5 |
|---|---|---|---|---|

The glass sheet 2 is a conventional flat sheet, preferably but not exclusively of quadrangular shape, and is of smoke-grey type. The thicknesses can vary from 4 mm to 5 mm. In general, a glass of smoke-grey type can be obtained by means of the addition of conventional metal oxides in the composition of the glass itself or through the application of an appropriate film to obtain the smoke-grey coloring. In the present case, the glass is obtained with the addition of conventional metal oxides or carbon black so as to allow the application of the film 3.

The film 3 is an adhesive black film that is laid on the whole surface of a first flat side 20. Preferably, the film is made of polycarbonate and has a thickness of 0.75-1.50 mm. This black film creates not only a mirror effect on the glass sheet, but also acts as a safety film should the glass break, thus preventing the breaking off of small pieces of glass. In particular, said film shows a window 30 formed by the removal of a portion of its material, preferably after it has been applied to the glass. The window is of the same size or smaller with respect to the longitudinal opening 40 of the duct 4.

It should be noted that the application of the film 3 of black polycarbonate adhesive material on a smoke-grey translucent glass sheet imparts the mirroring characteristic in places other than on said window 30 of the film. Consequently, in this portion the glass loses in effect its mirror-like reflecting capacity.

To avoid this drawback, and to provide backlighting, the above-mentioned particular duct 4 has been devised. This duct is in fact characterized by the fact that it includes a longitudinal sheet 6 to close the longitudinal opening 40. In other words, the sheet is interposed between the opening 40 of the duct 4 and the window 30 of the film 3. In addition, the longitudinal sheet 6 comprises a black translucent material that allows the passage or the diffusion of the light coming from the source 5 inside the duct and, when it is not illuminated, it offers the continuity of the mirroring zone.

According to the invention, as is better shown in figure 5, the duct has a squared C-shaped cross section. In particular, the opening 40 is delimited by two bends 44, each adapted to form an undercut to engage the plate, as will be explained later. The light source 5 is preferably made up of a series of LEDs; more preferably, a first 50 and a second series 51 of LED lights are mounted inside the cavity of the duct in position opposite to each other.

The duct 4 is formed from any material suitable to mount a light source that may or may not produce heat, like the LED lights. Preferably, the duct is made of aluminum or of plastic material like polycarbonate. In addition, the internal cavity of the duct is preferably colored or painted black. The plate 6 that closes the longitudinal opening 40 of the duct comprises a first face 60 and an opposite second face 61. On the second face 61 are formed two protruding and parallel ribs 62 that run along the whole length of the plate. Preferably, they are each formed at one of the two longitudinal borders of the plate. In addition, the ribs include a bend 63 such as to create an undercut that is complementary to the undercut formed by the bendings 44 of the C-shaped duct. This configuration makes it possible to connect the plate 6 to the duct 4 by sliding it sidewise from one end of the duct to the other, or by engaging the two ribs 62 by bending them when they are inserted into the opening 40 of the duct and by spring-back return when they have moved past the bends 44.

As previously explained, advantageously the plate 6 consists of a dark material that allows the passage of the light. In an example not according to the invention, this material is plexiglass or black opaline polycarbonate having a thickness of 2 mm. In an example not according to the invention, the plate 6 consists of a mixture of polycarbonate-based materials characterized by a refraction index of 1.586 calculated in accordance with the ISO 489 method, Procedure A. Moreover, light transmittance has a value of 89% calculated with the ISO 13468-2 method (ISO/FDIS 13468-2). According to the invention, this mixture is made up 90% of methylmethacrylate-methylacrylate copolymer (CAS N. 9011-87-4) methylmethacrylate (CAS 80-62-6) <0.5, about 7% titanium oxide) (CAS 13463-67-7), and about 3% carbon black (CAS 1333-86-4).

As shown in figure 5, the mirror 1 assembled according to the present invention has a compact structure in which the duct 4 is fixed to the glass 2 by means of the plate 6 which adheres perfectly along a peripheral portion 64 to a corresponding peripheral portion 32 of the window 30 of the film 3.

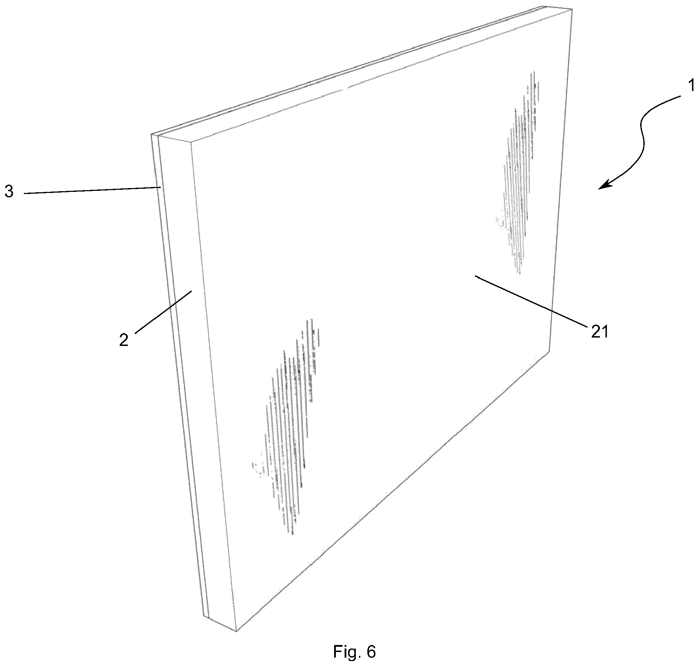

Now, since both the materials of the film 3 and the plate 6 have the same color, and thanks to the particular choice of the plate 6 and the glass 2, as shown in figure 6, the second face 21 of the mirror, that is, the reflecting face or front face, is completely homogeneous or, in other words, free of interruptions. Thus the mirroring function is not invalidated by any interruption, as is instead that caused by sand-blasting according to the prior art.

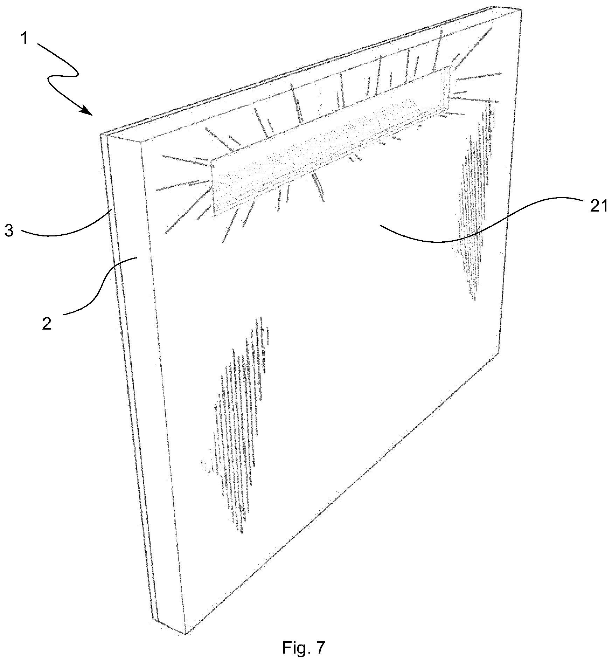

When the light source is switched on, as shown in figure 7, a part of the mirror that corresponds to said window 30 lights up with a surprising effect, since no edge defining the lighted area can be noticed.

From the above description, it is evident that the drawbacks of the prior art have been overcome and important advantages have been achieved.

Firstly, the structure of the mirror does not require processes such as the removal of a portion of the silver plating and sandblasting the glass in the same portion where the silver plating has been removed.

In addition, the duct that houses the light source is simply completed with a plate that is easy to make and low-cost, compared to the above processes of removing the silver plating and sandblasting.

The arrangement of a black film is also very simple, low-cost and easy to apply to the glass.

In this manner, as explained and illustrated in figures 6 and 7, the mirror is not interrupted in any of its portions; therefore there is a continuity of the reflecting surface that allows the users to look at their reflection at any point on the mirror, when the light is switched off. In other words, the backlighting source is completely concealed when it is not activated, thanks to the above-mentioned combination of the plate and the glass.

However, even when the light is switched on, the surprising effect is to suddenly see a lighted area without any frame or border appear in a portion that is not previously identifiable.

Many variant embodiments of the present invention can be adopted by the technician expert in the field without however departing from the scope of patent protection as defined by the enclosed claims.

For example, the mirror can have a square, rectangular, hexagonal or other regular or irregular polygonal shape, or it can be circular, oval or elliptical, depending on specific requirements or preferences.

The back-light areas can be more than one, variously positioned preferably near the edge of the mirror. These areas can also be shaped at will, since the duct or channel can be made in various shapes to satisfy any aesthetic or technical requirement.

The plate 6 can be formed directly on the duct 4 as a single molded or overinjected piece.

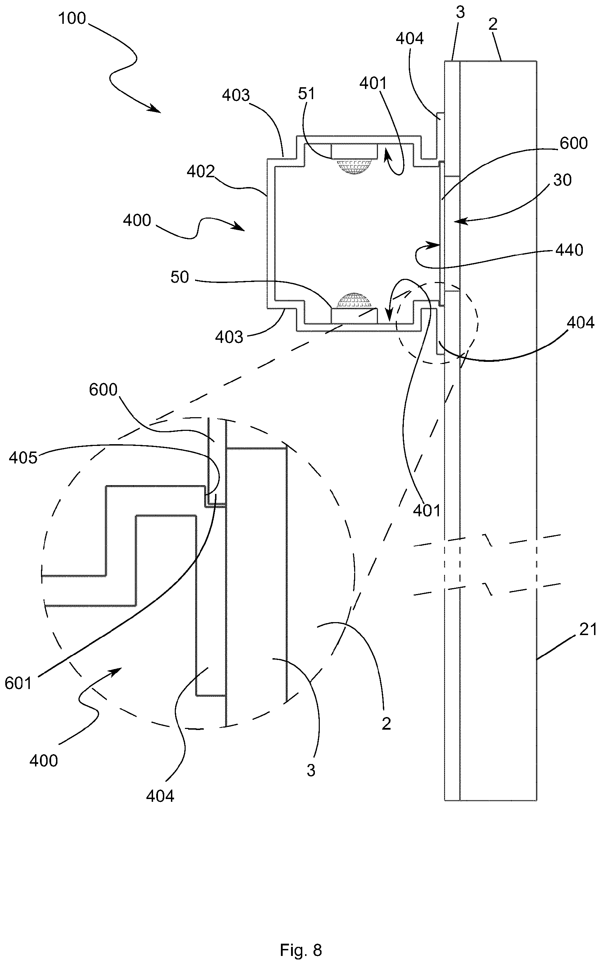

Moreover, in accordance with one embodiment, as shown in figure 8, the mirror 100 comprises a duct 400 formed by a general structure similar to the one previously described, so that identical reference numerals indicate the same parts. In particular, the duct has a transversal cross section such as to form two recesses 401 or hollows in which the two opposite sets of LEDs 51 previously described are housed. In detail, the duct 400 comprises a bottom 402 and two opposite side walls 403 provided with said recesses 401. The opening 440 is opposite to the bottom and is bounded by two outward-facing longitudinal edges 404 for fastening to the respective peripheral portion 32 of the opening 30 of the film 3. The longitudinal edge between said edges and the side walls 403 is provided with a step 405.

The sheet 600 that closes the opening 440 of the duct 400 is made so as to lodge into corresponding longitudinal edges 601 in said step 405. Moreover, the sheet has the same characteristics as the sheet 6 previously described, as is also the case with the glass plate 2.

In this manner, when the LEDs are switched on, from the second surface 21 of the mirror, that is, the reflecting one, only the light emitted by the LEDs is seen, while the individual points of light are concealed. In the case of bright light emitted by the LEDs it is thus convenient not to be in the direct glare of the light points. Moreover, the aesthetic effect of a uniform light is greatly appreciated.

In accordance with a further variant embodiment, the mirrors can also have different lights provided with adjustable Kelvin temperatures and with dimmers to modify their intensity. Proximity sensors can also be provided for these adjustments.

Furthermore, the black film, after having been glued to the glass, can also be covered with a heating plate to provide a defogging function.

Independently of the embodiments, the mirror will be connected to a conventional transformer and a possible electronic control unit to adjust the light and the sensors. A power supply cable is commonly connected to said transformer.

**Claims**

1. Back-light mirror (1;100) comprising a glass sheet (2) provided with opposite plane faces (20,21), a film (3) of such material as to give the glass a mirroring quality when applied to a first one (20) of said plane faces and also provided with a window (30) close to a first side (31) and a duct (4;400) extending substantially rectilinearly along an axis (X-X) and having a generally C-shaped cross section with a longitudinal opening (40;440) which overlaps the window (30) of the film (3), said duct housing a lighting source (5), the sheet (2) is made of smoky glass, the film (3) being a black plastic film, and the duct (4;400) is fixed to the first face (20) of the glass sheet (2) so that between said longitudinal opening (40;440) and the window (30) of the film (3) is interposed a translucent black-opaline plastic plate (6;600), **characterized in that** said smoky glass is semi-reflecting and semi-transparent, with a thickness from 4 to 5 mm and the following light transmittance measured according to Standard GB/T 18915.1-2013

$$Y=48.70 \qquad L=75.30 \qquad a=-2.00 \qquad b=-0.5,$$

   said plate (6;600) is a mixture made up 90% of methylmethacrylate-methylacrylate copolymer, methyl-methacrylate <0.5, about 7% titanium oxide, and about 3% carbon black.

2. Back-light mirror (1 ;100) according to claim 1, wherein said film (3) is a black adhesive polycarbonate film having a thickness between 0.75 mm and 1.50 mm.

3. Back-light mirror (1) according to any claim from 1 to 2, wherein said duct (4) has a C-shaped squared cross section whose opening (40) is bounded by two bends (44), each adapted to form an undercut to engage the plate (6).

4. Back-light mirror (1) according claim 3, wherein the plate (6) closing the longitudinal opening (40) of the duct (4) comprises a first face (60) and a second face (61) opposite the first one, on the second face being formed two protruding and parallel ribs (62) that run along the whole length of the plate and comprise a bend (63) such as to create an undercut complementary to the undercut formed by the bendings (44) of the C-shaped duct.

5. Back-light mirror (1) according to any claim from 1 to 4, wherein said plate (6) adheres perfectly along a perimetrical portion (64) to a corresponding perimetrical portion (32) of the window (30) of the film (3).

6. Back-light mirror (100) according to any of claims 1 and 2 wherein the duct (400) has a transversal cross section with a bottom (402), two opposite side walls (403), each provided with a recess (401) in which a set of LEDs (51) are housed as a lighting source (5) and an opening (440) opposed to the bottom and bounded by two outward-facing longitudinal edges (404), the longitudinal edge between said edges and the side walls being provided with a step (405) for tightly engaging corresponding longitudinal edges (601) of the plate (600) that closes the opening (440).

7. Back-light mirror (1) according to any of claims from 1 to 6, wherein said lighting source (5) comprises lights with adjustable Kelvin temperatures, a dimmer to modify their intensity and/or proximity sensors for such adjustments.

8. Back-light mirror (1) according to any of claims from 1 to 6, also comprising a heating plate that covers the film (3) after the film has been glued onto the glass (2).

**EP 3 901 673 B1**

**Patentansprüche**

1. Hinterleuchteter Spiegel (1; 100) mit einer Glasscheibe (2), die mit gegenüberliegenden ebenen Flächen (20, 21) versehen ist, einer Folie (3) aus einem solchen Material, dass sie dem Glas eine spiegelnde Eigenschaft verleiht, wenn sie auf eine erste (20) der ebenen Flächen aufgebracht wird, und außerdem mit einem Fenster (30) in der Nähe einer ersten Seite (31) und einem Schacht (4; 400) versehen ist, der sich im Wesentlichen geradlinig entlang einer Achse (X-X) erstreckt und einen allgemein C-förmigen Querschnitt mit einer Längsöffnung (40; 440) aufweist, die das Fenster (30) der Folie (3) überlappt, wobei der Schacht eine Lichtquelle (5) aufnimmt, die Scheibe (2) aus Rauchglas besteht, die Folie (3) eine schwarze Kunststofffolie ist und der Schacht (4; 400) an der ersten Seite (20) der Glasscheibe (2) so befestigt ist, dass zwischen der Längsöffnung (40;440) und dem Fenster (30) der Folie (3) eine durchscheinende schwarz-opaline Kunststoffplatte (6; 600) eingefügt ist, **dadurch gekennzeichnet, dass** das Rauchglas halb reflektierend und halb transparent ist, eine Dicke von 4 bis 5 mm und die folgende Lichtdurchlässigkeit aufweist, gemessen gemäß der Norm GB/T 18915.1- 2013

$$Y=48,70 \qquad L=75,30 \qquad a=-2,00 \qquad b=-0,5,$$

die Platte (6; 600) eine Mischung ist, die zu 90 % aus Methylmethacrylat-Methylacrylat-Copolymer, Methylmethacrylat <0,5, etwa 7 % Titanoxid und etwa 3 % Kohlenschwarz besteht.

2. Hinterleuchteter Spiegel (1; 100) nach Anspruch 1, wobei die Folie (3) eine schwarze klebende Polycarbonatfolie mit einer Dicke zwischen 0,75 mm und 1,50 mm ist.

3. Hinterleuchteter Spiegel (1) nach einem der Ansprüche 1 bis 2, wobei der Schacht (4) einen C-förmigen, quadratischen Querschnitt aufweist, dessen Öffnung (40) von zwei Biegungen (44) begrenzt wird, die jeweils dazu eingerichtet sind, eine Hinterschneidung zu bilden, um die Platte (6) zu erfassen.

4. Hinterleuchteter Spiegel (1) nach Anspruch 3, wobei die Platte (6), die die Längsöffnung (40) des Schachtes (4) verschließt, eine erste Fläche (60) und eine zweite, der ersten gegenüberliegende Fläche (61) umfasst, wobei auf der zweiten Fläche zwei vorspringende und parallele Rippen (62) ausgebildet sind, die sich über die gesamte Länge der Platte erstrecken und eine Biegung (63) umfassen, um eine Hinterschneidung zu erzeugen, die komplementär zu der Hinterschneidung ist, die von den Biegungen (44) des C-förmigen Schachtes gebildet wird.

5. Hinterleuchteter Spiegel (1) nach einem der Ansprüche 1 bis 4, wobei die Platte (6) entlang eines Umfangsabschnitts (64) perfekt an einem entsprechenden Umfangsabschnitt (32) des Fensters (30) der Folie (3) haftet.

6. Hinterleuchteter Spiegel (100) nach einem der Ansprüche 1 und 2, wobei der Schacht (400) einen Querschnitt mit einem Boden (402), zwei gegenüberliegenden Seitenwänden (403), die jeweils mit einer Aussparung (401) versehen sind, in der ein Satz von LEDs (51) als Lichtquelle (5) untergebracht ist, und eine Öffnung (440) aufweist, die dem Boden gegenüberliegt und von zwei nach außen weisenden Längskanten (404) begrenzt wird, wobei die Längskante zwischen den Kanten und den Seitenwänden mit einer Stufe (405) versehen ist, um in entsprechende Längskanten (601) der Platte (600), die die Öffnung (440) verschließt, fest einzugreifen.

7. Hinterleuchteter Spiegel (1) nach einem der Ansprüche 1 bis 6, wobei die Lichtquelle (5) Leuchten mit einstellbaren Kelvin-Temperaturen, einen Dimmer zur Veränderung ihrer Intensität und/oder Näherungssensoren für solche Einstellungen umfasst.

8. Hinterleuchteter Spiegel (1) nach einem der Ansprüche 1 bis 6, der auch eine Heizplatte umfasst, die die Folie (3) abdeckt, nachdem die Folie auf das Glas (2) geklebt wurde.

**Revendications**

1. - Miroir à rétroéclairage (1 ; 100) comprenant une feuille de verre (2) comportant des faces planes opposées (20, 21), un film (3) d'un matériau tel qu'il confère au verre une qualité de miroir lorsqu'il est appliqué sur une première (20) desdites faces planes et comportant également une fenêtre (30) proche d'un premier côté (31), et un conduit (4 ; 400) s'étendant sensiblement de façon rectiligne le long d'un axe (X-X) et ayant une section transversale généralement en forme de C avec une ouverture longitudinale (40 ; 440) qui chevauche la fenêtre (30) du film (3), ledit conduit logeant une source d'éclairage (5), la feuille (2) étant faite en verre fumé, le film (3) étant un film plastique noir, et le conduit (4 ; 400) étant fixé à la première face (20) de la feuille de verre (2) de telle sorte qu'entre ladite ouverture longitudinale (40 ; 440) et la fenêtre (30) du film (3) est interposée une plaque plastique noir-opalin translucide (6; 600), **caractérisé par le fait que** ledit verre fumé est semi-réfléchissant et semi-transparent, avec une épaisseur de 4 à 5 mm et la transmittance de lumière suivante mesurée conformément à la Norme GB/T 18915.1-2013

$$Y=48,70 \qquad L=75,30 \qquad a=-2,00 \qquad b=-0,5,$$

ladite plaque (6 ; 600) étant un mélange fait de 90 % de copolymère méthacrylate de méthyle-acrylate de méthyle, méthacrylate de méthyle < 0,5, d'environ 7 % d'oxyde de titane et d'environ 3 % de noir de carbone.

2. - Miroir à rétroéclairage (1 ; 100) selon la revendication 1, dans lequel ledit film (3) est un film de polycarbonate adhésif noir ayant une épaisseur entre 0,75 mm et 1,50 mm.

3. - Miroir à rétroéclairage (1) selon l'une quelconque des revendications 1 et 2, dans lequel ledit conduit (4) a une section transversale carrée en forme de C dont l'ouverture (40) est délimitée par deux replis (44), chacun étant apte à former une gorge pour engager la plaque (6) .

4. - Miroir à rétroéclairage (1) selon la revendication 3, dans lequel la plaque (6) fermant l'ouverture longitudinale (40) du conduit (4) comprend une première face (60) et une seconde face (61) opposée à la première, sur la seconde face étant formées deux nervures saillantes et parallèles (62) qui s'étendent sur toute la longueur de la plaque et comprennent un repli (63) de manière à créer une gorge complémentaire de la gorge formée par les replis (44) du conduit en forme de C.

5. - Miroir à rétroéclairage (1 ; 100) selon l'une quelconque des revendications 1 à 4, dans lequel ladite plaque (6) adhère parfaitement le long d'une partie périmétrique (64) à une partie périmétrique correspondante (32) de la fenêtre (30) du film (3).

6. - Miroir à rétroéclairage (100) selon l'une quelconque des revendications 1 et 2, dans lequel le conduit (400) a une section transversale avec un fond (402), deux parois latérales opposées (403), chacune comportant un évidement (401) dans lequel un ensemble de DEL (51) est logé comme source d'éclairage (5) et une ouverture (440) opposée au fond et délimitée par deux bords longitudinaux (404) tournés vers l'extérieur, le bord longitudinal entre lesdits bords et les parois latérales comportant un gradin (405) pour engager étroitement des bords longitudinaux correspondants (601) de la plaque (600) qui ferme l'ouverture (440).

7. - Miroir à rétroéclairage (1) selon l'une quelconque des revendications 1 à 6, dans lequel ladite source d'éclairage (5) comprend des lampes à températures Kelvin réglables, un variateur pour modifier leur intensité et/ou des capteurs de proximité pour de tels réglages.

8. - Miroir à rétroéclairage (1) selon l'une quelconque des revendications 1 à 6, comprenant également une plaque chauffante qui recouvre le film (3) après que le film a été collé sur le verre (2).

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2419091 A
- WO 2007062409 A

**Non-patent literature cited in the description**

- *CHEMICAL ABSTRACTS,* 9011-87-4
- *CHEMICAL ABSTRACTS,* 80-62-6
- *CHEMICAL ABSTRACTS,* 13463-67-7
- *CHEMICAL ABSTRACTS,* 1333-86-4